# EUROPEAN PATENT SPECIFICATION

(11) **EP 1 690 722 B1**
(45) Date of publication and mention of the grant of the patent: **31.03.2010**
(21) Application number: 06002764.6
(22) Date of filing: 10.02.2006
(51) Int. Cl.: B60K 5/12, B62D 21/09

(54) **Mount apparatus mounting structure**
Befestigungsstruktur für eine Befestigungseinrichtung
Structure de montage d'un dispositif de support

(30) Priority: 14.02.2005 JP 2005036203
(43) Date of publication of application: 16.08.2006
(73) Proprietor: Honda Motor Co., Ltd., Tokyo (JP)
(72) Inventor: Tamaki, Hidemi c/o Honda R&D Co., Ltd., Wako-shi Saitama (JP); Yasuhara, Shigeto c/o Honda R&D Co., Ltd., Wako-shi Saitama (JP); Oyama, Masaru c/o Honda R&D Co., Ltd., Wako-shi Saitama (JP)
(74) Representative: Herzog, Markus

(56) References cited:
- DE-A1- 10 031 996
- DE-A1- 10 039 657
- JP-A- 5 319 301

## Description

### Background of the Invention

### 1. Field of the Invention

The present invention relates to a mount apparatus mounting structure which is designed to allow a frame member to support an engine and a transmission in a vehicle. More particularly, the present invention relates to a mount apparatus mounting structure which is designed to increase support rigidity by supporting a fixing member of a mount apparatus with a support plate which is joined to the frame member.

### 2. Description of the Related Art

In a vehicle, it is a general practice to enhance the occupant protection performance by absorbing impact energy generated when a body of the vehicle is involved in a collision through the collapsing deformation of front-end side frames which extend in a longitudinal direction of the body at a front end portion thereof.

On the other hand, in a vehicle in which an engine is installed at a front end portion of a body thereof, the engine is supported on front-end side frames via engine mounts. While the engine mounts are designed to be fastened to the front-end side frames with fixing bolts, when the support rigidity of the engine mounts becomes insufficient, the vibration of the engine is increased. Therefore, it is a known technique that the support rigidity of the engine mounts is enhanced by support plates so as to realize a reduction in the vibration of the engine (refer to Japanese Patent Publication No. 3358129 B2). DE-A-100 39 657 discloses a mounting structure according to the preamble of claim 1.

In the structure in which the support rigidity of the engine mount is enhanced by the support plate (the reinforcement bracket) which is disposed on the front-end side frame by being fastened thereto with fixing bolts at two longitudinal locations, however, since the rigidity of the front-end side frame is partially increased in an area of the front-end side frame where the support plate is so provided, there has been caused a problem that the adjustment of collapsing deformation of the front-end side frame for a collision in which the body of the vehicle would be involved becomes troublesome.

### Summary of the Invention

The invention was made with a view to solving the problem inherent in the related-art technique and an object thereof is to provide a mount apparatus mounting structure which can realize the increase in support rigidity of the mount apparatus and facilitate the adjustment of deformation characteristics of the frame member for a collision in which the body of the vehicle would be involved.

With a view to solving the problem, according to an aspect of the invention, there is provided a mount apparatus mounting structure, wherein a fixing member (17, 18) for fixing a mount apparatus (2) is disposed on either an upper wall or a lower wall (21) of a closed-sectioned frame member (1), and the fixing member (17, 18) is joined to a support plate (31, 32) which is caused to extend from a portion (33) which is joined to one of side walls (22) of the frame member in a bulkhead-like fashion in such a manner as to substantially partition an interior of the frame member to thereby be joined to the other side wall (23) of the frame member.

According to the aspect of the invention, since the support plate is made to function substantially as the bulkhead-shaped portion which partitions the interior of the frame member, a high support rigidity can be secure.

Furthermore, while the joint portion on a distal portion side of the support plate where the rigidity of the frame member is partially increased constitutes an origin of the collapsing deformation of the frame member, since the position where the support plate is joined to the frame member, that is, the position where the rigidity is increased by joining the support plate to the frame member can be changed without changing the position where the fixing member is provided by changing an angle at which the support member is caused to extend in the bulkhead-like fashion from the portion where the support plate is joined to the one of the side walls of the frame member, the adjustment of the collapsing deformation of the frame member can be facilitated.

In this case, when a plurality of fixing members are provided on the frame member in such a manner as to be spaced apart from each other in a direction in which the frame member extends, for example, in the case of a front-end side frame, in a longitudinal direction of the body, the plurality of fixing members may be made to be supported individually by separate support plate members. According to this configuration, the rigidity of the frame member is increased only at portions where the respective support plates are joined to the frame member. Hence, the adjustment of collapsing deformation of the frame member can be facilitated remarkably compared with a case where the rigidity of the frame member is increased on the whole by a configuration in which the plurality of fixing members are supported by an integral support plate.

In addition, while the position where the support plate is joined to the frame member may be limited to the side wall of the frame member from the viewpoint of moving appropriately the position where the support plate is joined to the frame member along the direction in which the frame member extends in order to adjust the collapsing deformation of the frame member, since the collapsing deformation of the frame member is not affected largely badly as long as the joining position of the support plate to the frame member remains as near as the joining position on the side wall of the frame member, the support plate may be made to be joined, for example, to the upper wall and the lower wall of the frame member in addition to the side wall thereof.

Thus, according to the invention, since the support plate is formed substantially into the bulkhead-shaped portion which substantially partitions the interior of the frame member, a high support rigidity can be secured, and moreover, since the joining position of the support plate to the frame member can easily be changed without changing the position of the fixing member, the adjustment of collapsing deformation of the frame member can be facilitated, whereby the occupant protection performance can be enhanced by optimizing the collapsing deformation of the frame member when the body of a vehicle is involved in a collision while realizing the reduction in vibration, for example, of an engine by enhancing the support rigidity of the mount apparatus.

### Brief Description of the Drawings

Fig. 1 is a perspective view which shows a mount apparatus mounting structure according to the invention.
Fig. 2 is a sectional view which shows the mount apparatus mounting structure shown in Fig. 1 as viewed from the top thereof.
Fig. 3 is an exemplary drawing which shows a front-end portion of a body of a vehicle to which the mount apparatus mounting structure shown in Fig. 1 is applied.
Fig. 4 is a sectional view which shows another embodiment of a mount apparatus mounting structure according to the invention.
Fig. 5 is a sectional view which shows a further embodiment of a mount apparatus mounting structure according to the invention.

### Detailed Description of the Invention

Hereinafter, referring to the drawings, embodiments of the invention will be described.

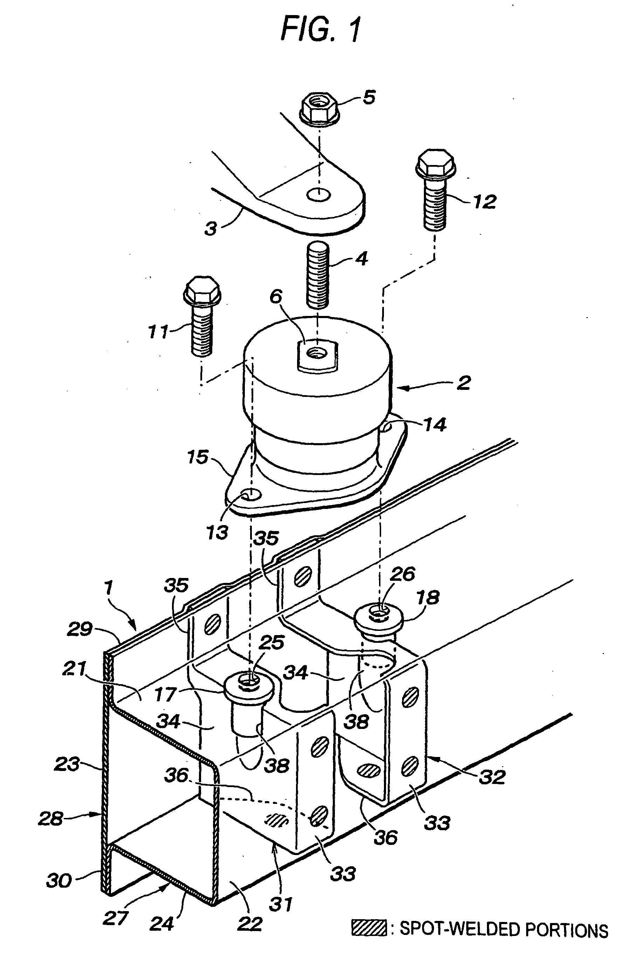

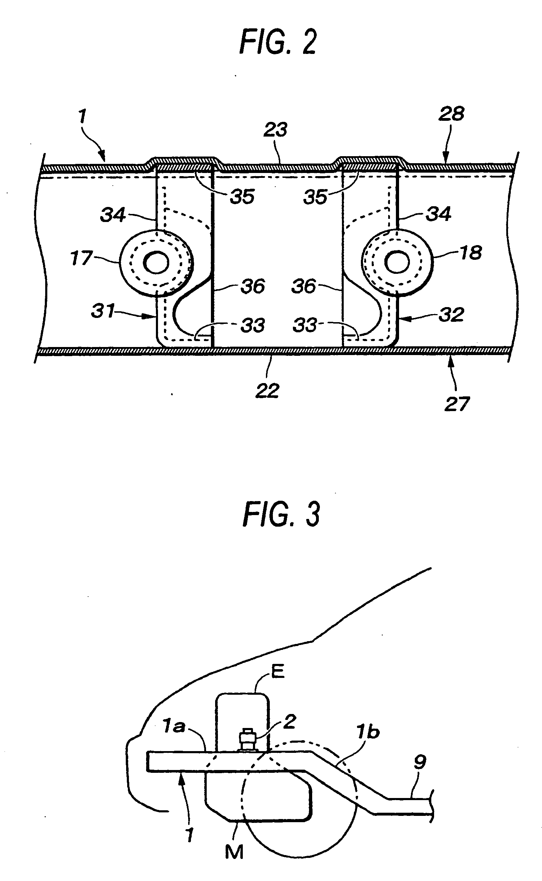

Fig. 1 is an exploded perspective view which shows a mount apparatus mounting structure according to the invention. Fig. 2 is a sectional view of the mount apparatus shown in Fig. 1 as viewed from the top thereof. Fig. 3 is an exemplary drawing which shows a front portion of a body of a vehicle to which the mount apparatus mounting structure shown in Fig. 1 is applied. Here, an engine mount (a mount apparatus) 2 is provided on a front-end side frame (a frame member) 1 which extends in a longitudinal direction of the body at a front portion thereof which allows an engine E disposed at the front portion of the body to be supported on the front-end side frame 1.

The front-end side frame 1 is provided in pair, that is, a pair of left and right front-end side frames 1 is provided. As shown in Fig. 3, a power unit into which the engine E and a transmission M are integrated is installed between the left and right front-end side frames 1. The front-end side frames 1 each have a horizontal portion la which extends substantially horizontally and an inclined portion 1b which extends obliquely downwards from the rear of the horizontal portion 1a. Rear ends of the inclined portions 1b are connected to side sills 9 which extend in the longitudinal direction of the body on left- and right-hand sides of the body. The engine mount 2 is mounted on the horizontal portion 1a, which is positioned further forward than the inclined portion 1b. When the vehicle is involved in a frontal collision, a region of the front-end side frame 1 which extends from a front end to a portion thereof which lies on the periphery of the engine mount 2 is mainly bent and deformed so as to absorb impact energy.

The engine mount 2 is of a fluid-sealed type, and as is shown in Fig. 1, a mount bracket 3 provided on a side of the engine E is fixed to a mount portion 6 at an upper end of the engine mount 2 with a bolt 4 and a nut 5. In addition, a mount flange 15, which is provided with two bolt insertion holes 13, 14 through which two fixing bolts 11, 12 are passed, respectively, so as to fix the engine mount 2 to the front-end side frame 1, is provided at a lower portion of the engine mount 2.

The front-end side frame 1 is a member having an upper wall 21, two side walls 22, 23 and a lower wall 24 and formed into a shape having a square closed cross section. Two nut members (fixing members) 17, 18, into which the fixing bolts 11, 12 for fixing the engine mount 2 are screwed, are disposed on the upper wall 21 in such a manner as to be aligned in the direction in which the front-end side frame 1 extends (in the longitudinal direction of the body). The respective nut members 17, 18 are positioned substantially at a center of the front-end side frame 1 in a width direction (a transverse direction) thereof. In particular, here, the front-end side frame 1 is made up of a top-hat sectioned member 27 and a flat plate-shaped member 28 which are joined together at upper and lower flanges 29, 30.

In addition, bolt insertion holes 25, 26 are opened in the upper wall 21 of the front-end side frame 1 at positions which align with threaded holes of the nut members 17, 18, respectively. The fixing bolts 11, 12 are passed, respectively, through the bolt insertion holes 13, 14 in the engine mount 2 and are then passed, respectively, through the bolt insertion holes 25, 26 so as to be screwed, respectively, into the nut members, 17, 18, whereby the engine mount 2 is fixed to the front-end side frame 1.

Two support plates (support plates) 31, 32 are provided in the interior of the front-end side frame 1 in such a manner as to support individually the nut members 17, 18. These support plates 31, 32 are formed into shapes which are symmetrical with each other and each have a primary side joint portion 33 that is to be joined to one of the side walls, that is, the side wall 22 of the front-end side frame 1, a bulkhead-shaped portion 34 which is caused to extend from the primary side joint portion 33 in a bulkhead-like fashion in such a manner as to substantially partition the interior of the front-end side frame 1, a secondary side joint portion 35 that is to be joined to the other side wall 23 of the front-end side frame 1, and a lower joint portion 36 that is to be joined to the lower wall 24 of the front-end side frame 1.

The primary side joint portion 33 is provided in such a manner as to extend vertically along the side wall 22 and is joined to the side wall 22 by spot welding. The lower joint portion 36 is caused to extend horizontally from a lower end of the bulkhead-shaped portion 34 along the lower wall 24 and is joined to the lower wall 24 by spot welding.

The secondary joint portion 35 is bent horizontally from an upper end of the bulkhead-shaped portion 34 into an L-shaped fashion and is thereafter caused to extend upwards in a projecting piece-like fashion so as to be inserted between the members 27, 28 which constitutes the front-end side frame 1 at an upper flange portion 29 thereof, whereby the secondary side joint portion 35 is joined to the members 27, 28 by spot welding.

In addition, semi-cylindrically curved holding portions 38 are provided on the bulkhead-shaped portions 34 of the support plates 31, 32 in such a manner as to receive therein horizontal half portions of the nut members 17, 18, respectively, and sides of the nut members 17, 18 are secured to the holding portions 38 by fillet welding.

Note that in order to enhance the support rigidity, in addition to the semi-cylindrical holding portions 38, irregularities may be formed at appropriate portions of the support plates 31, 32 by forming reinforcement ribs thereon.

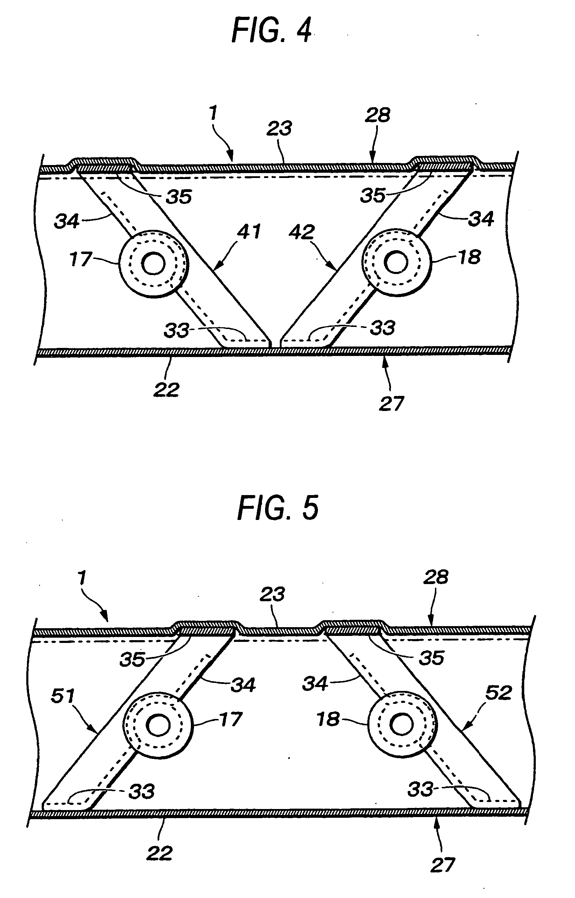

Figs. 4 and 5 are sectional views which show mount apparatus mounting structures of other embodiments according to the invention. While in the embodiment shown in Fig. 2, the bulkhead-shaped portions 34 of the support plates 31, 32 are provided in the direction in which the bulkhead-shaped portions 34 intersect the side wall 22 of the front-end side frame 1 at right angle as viewed from the top thereof, in the embodiments shown in Figs. 4 and 5, bulkhead-shaped portions 34 of support plates 41, 42, 51, 52 are provided in directions in which the bulkhead-shaped portions 34 are inclined relative to side walls 22 of front-end side frames 1 as viewed from the top thereof. Positions where two nut members 17, 18 are disposed remain the same as those of the embodiment shown in Fig. 2. Note that in the embodiments shown in Figs. 4, 5, like reference numerals are imparted to constituent components having like functions to those of the embodiment shown in Fig. 1, and the description thereof will be omitted.

In an embodiment shown in Fig. 4, respective primary side joint portions 33 of two support plates 41, 42 which support two nut members 17, 18 individually are joined to a side wall 22 of a front-end side frame 1 at positions which are proximate to each other within an area on the front-end side frame 1 which is defined between the two nut members 17, 18 in a direction in which the front-end side frame 1 extends (in a longitudinal direction of a body of a vehicle). Respective bulkhead-shaped portions 34 of the two support plates 41, 42 are caused to extend from the primary side joint portions 33 in such a state that the bulkhead-shaped portions 34 are inclined in such a manner as to be separated apart from each other as they so extend.

On the other hand, in an embodiment shown in Fig. 5, respective primary side joint portions 33 of two support plates 51, 52 which support two nut members 17, 18 individually are joined to a side wall 22 of a front-end side frame 1 at positions which are spaced largely apart from to each other outside an area on the front-end side frame 1 which is defined between the two nut members 17, 18 in a direction in which the front-end side frame 1 extends (in the longitudinal direction of the body of the vehicle). Respective bulkhead-shaped portions 34 of the two support plates 51, 52 are caused to extend from the primary side joint portions 33 in such a state that the bulkhead-shaped portions 34 are inclined in such a manner as to approach each other as they so extend.

Thus, in the mount apparatus mounting structures of the invention, the joining positions of the support plates 31, 32, 41, 42, 51, 52 to the front-end side frame 1 can be moved in the direction in which the front-end side frame 1 extends (in the longitudinal direction of the body of the vehicle) without changing the positions where the nut members 17, 18 are disposed by changing the angle at which the bulkhead-shaped portions 34 extend from the primary side joint portions 33 of the support plates 31, 32, 41, 42, 51, 52, whereby the front-end side frame 1 can easily be set to optimum collapsing deformation properties.

In particular, since the plurality of nut members 17, 18 adapted to fix the engine mount 2 to the front-end side frame 1 are supported individually by the separate support plates 31, 32, 41, 42, 51, 52, the rigidity of the front-end side frame 1 is increased partially only at the portions where the respective support plates 31, 32, 41, 42, 51, 52 are joined to the front-end side frame 1. Hence, the adjustment of the deformation properties of the front-end side frame 1 becomes remarkably easy compared with a case where the rigidity of the front-end side frame 1 is increased on the whole by a configuration in which the plurality of support members 17, 18 are supported by an integral support plate.

The mount apparatus mounting structures according to the embodiments of the invention have the advantage that not only can the high support rigidity be secured but also the adjustment of the deformation properties of the frame member can easily be implemented for a collision in which the body of the vehicle is involved, and are therefore useful as the mount apparatus mounting structure for enabling the engine disposed at the front-end portion of the body to be supported on the front-end side frames.

## Claims

1. A mount apparatus mounting structure, wherein a fixing member (17, 18) for fixing a mount apparatus (2) is disposed on either an upper wall (21) or a lower wall of a closed-sectioned frame member (1) and the fixing member (17, 18) is joined to a support plate (31, 32) which is caused to extend from a portion joined to one of side walls (22) of the frame member (1) in a bulkhead-like fashion in such a manner as to substantially partition an interior of the frame member (1) so as to be joined to the other side wall (23) of the frame member (1),
the support plate (31, 32) is provided in the interior of the front side frame (1) in such a manner as to support individually the nut member (17, 18),
the support plate (31, 32) has a primary side joint portion (33) that is to be joined to one (22) of the side walls of the front side frame (1), a bulkhead-shaped portion (34) which is caused to extend from the primary side joint portion (33) in a bulkhead-like fashion in such a manner as to substantially partition the interior of the front side frame (1),
the primary side joint portion (33) is provided in such a manner as
to extend vertically along the side wall (22) and is joined to the side wall (22) by spot welding, **characterized in that** the front side frame (1) is made up of a top-hat sectioned member (27) and a flat plate-shaped member (28) which are joined together at upper and lower flanges (29, 30), a secondary side joint portion (35) of the support plate (31, 32) is to be joined to the other side wall (23) of the front side frame (1), the secondary side joint portion (35) is bent and caused to extend in a projecting
piece-like fashion from the bulkhead-shaped portion (34) so as to be inserted between the members (27, 28) which constitute the front side frame (1) at an upper flange portion (29) of the front side
frame (1), whereby the secondary side joint portion (35) is joined to the members (27, 28) by spot welding.

2. The mount apparatus mounting structure according to claim 1, wherein the support plate (31, 32) has a lower joint portion (36)
that is to be joined to the lower wall (24) of the front side frame (1), and
the lower joint portion (36) is caused to extend horizontally from
a lower end of the bulkhead-shaped portion (34) along the lower wall (24) and is joined to the lower wall (24) by spot welding.

3. The mount apparatus mounting structure according to claim 1, wherein the support plate (31, 32) is provided in a state that it is inclined relative to the side walls (22, 23) of the frame member (1).

4. The mount apparatus mounting structure according to claim 1, wherein a pair of support plates (31, 32) is formed into shapes which are symmetrical with each other.

## Patentansprüche

1. Lagervorrichtungs-Befestigungsstruktur, worin ein Befestigungselement (17, 18) zum Befestigen einer Lagervorrichtung (2) an entweder einer Oberwand (21) oder einer Unterwand eines Rahmenelements (1) mit geschlossenem Querschnitt angeordnet ist und das Befestigungselement (17, 18) mit einer Stützplatte (31, 32) verbunden ist, die sich trennwandartig von einem Abschnitt erstreckt, der mit einer von Seitenwänden (22) des Rahmenelements (1) verbunden ist, derart, dass ein Innenraum des Rahmenelements (1) im Wesentlichen unterteilt wird, zur Verbindung mit der anderen Seitenwand (23) des Rahmenelements (1),
wobei die Stützplatte (31, 32) im Innenraum des vorderen Seitenrahmens (1) derart vorgesehen ist, dass sie das Mutterelement (17,18) einzeln trägt,
wobei die Stützplatte (31, 32) einen primärseitigen Verbindungsabschnitt (33), der mit einer (22) der Seitenwände des vorderen Seitenrahmens (1) zu verbinden ist, und einen trennwandförmigen Abschnitt (34), der sich von dem primärseitigen Verbindungsabschnitt (33) trennwandartig derart erstreckt, dass der Innenraum des vorderen Seitenrahmens (1) im Wesentlichen unterteilt wird, aufweist,
wobei der primärseitige Verbindungsabschnitt (33) derart vorgesehen ist, dass er sich vertikal entlang der Seitenwand (22) erstreckt und mit der Seitenwand (22) durch Punktschweißung verbunden ist,
**dadurch gekennzeichnet, dass**
der vordere Seitenrahmen (1) aus einem Element mit hutförmigem Querschnitt (27) und einem flachen plattenförmigen Element (28) aufgebaut ist, die an oberen und unteren Flanschen (29, 30) miteinander verbunden sind,
wobei ein sekundärseitiger Verbindungsabschnitt (35) der Stützplatte (31, 32) mit der anderen Seitenwand (33) des vorderen Seitenrahmens (1) zu verbinden ist,
wobei der sekundärseitige Verbindungsabschnitt (35) gebogen ist und sich von dem trennwandförmigen Abschnitt (31) nach Art eines vorstehenden Stücks erstreckt, um zwischen die Elemente (27, 28), die den vorderen Seitenrahmen (1) darstellen, an einem oberen Flanschabschnitt (29) des vorderen Seitenrahmens (1) eingesetzt zu werden, wobei der sekundärseitige Verbindungsabschnitt (35) durch Punktschweißung mit den Elementen (27, 28) verbunden ist.

2. Die Lagervorrichtungs-Befestigungsstruktur gemäß Anspruch 1, worin die Stützplatte (31, 32) einen unteren Verbindungsabschnitt (36) aufweist, der mit der Unterwand (24) des vorderen Seitenrahmens (1) zu verbinden ist, und
sich der untere Verbindungsabschnitt (36) von einem Unterende des trennwandförmigen Abschnitts (34) entlang der Unterwand (24) horizontal erstreckt und mit der Unterwand (24) durch Punktschweißung verbunden ist.

3. Die Lagervorrichtungs-Befestigungsstruktur gemäß Anspruch 1, worin die Stützplatte (31, 32) in einem Zustand vorgesehen ist, in dem sie relativ zu den Seitenwänden (22, 23) des Rahmenelements (1) geneigt ist.

4. Die Lagervorrichtungs-Befestigungsstruktur gemäß Anspruch 1, worin ein Paar von Tragplatten (31, 32) zu Formen ausgebildet ist, die zueinander symmetrisch sind.

## Revendications

1. Structure de montage d'un dispositif de support, dans laquelle un élément de fixation (17, 18) pour fixer un dispositif de support (2) est disposé sur une paroi supérieure (21) ou une paroi inférieure d'un élément de châssis à section fermée (1) et l'élément de fixation (17, 18) est assemblé à une plaque de support (31, 32) qui est amenée à s'étendre à partir d'une partie assemblée à l'une des parois latérales (22) de l'élément de châssis (1) à la manière d'une cloison afin de séparer sensiblement un intérieur de l'élément de châssis (1) afin d'être assemblée à l'autre paroi latérale (23) de l'élément de châssis (1),
la plaque de support (31, 32) est prévue dans l'intérieur du châssis latéral avant (1) afin de supporter individuellement l'élément d'écrou (17, 18),
la plaque de support (31, 32) a une partie de joint latérale principale (33) qui doit être assemblée à l'une (22) des parois latérales du châssis latéral avant (1), une partie en forme de cloison (34) qui est amenée à s'étendre à partir de la partie de joint latérale principale (33) à la manière d'une cloison afin de séparer sensiblement l'intérieur du châssis latéral avant (1),
la partie de joint latérale principale (33) est prévue afin de s'étendre verticalement le long de la paroi latérale (12) et est assemblée sur la paroi latérale (22) par un soudage par points, **caractérisée en ce que** le châssis latéral avant (1) est composé d'un élément à section en forme d'oméga (27) et d'un élément en forme de plaque plate (28) qui sont assemblés au niveau des rebords supérieur et inférieur (29, 30),
une partie de joint latérale secondaire (35) de la plaque de support (31, 32) doit être assemblée sur l'autre paroi latérale (23) du châssis latéral avant (1),
la partie de joint latérale secondaire (35) est pliée et amenée à s'étendre à la manière d'une pièce en saillie à partir de la partie en forme de cloison (34) afin d'être insérée entre les éléments (27, 28) qui constituent le châssis latéral avant (1) au niveau d'une partie de rebord supérieur (29) du châssis latéral avant (1), moyennant quoi la partie de joint latérale secondaire (35) est assemblée aux éléments (27, 28) par soudage par points.

2. Structure de montage de dispositif de support selon la revendication 1, dans laquelle la plaque de support (31, 32) a une partie de joint inférieure (36) qui doit être assemblée sur la paroi inférieure (24) du châssis latéral avant (1), et
la partie de joint inférieure (36) est amenée à s'étendre horizontalement à partir d'une extrémité inférieure de la partie en forme de cloison (34) le long de la paroi inférieure (24) et est assemblée sur la paroi inférieure (24) par soudage par points.

3. Structure de montage de dispositif de support selon la revendication 1, dans laquelle la plaque de support (31, 32) est prévue dans un état dans lequel elle est inclinée par rapport aux parois latérales (22, 23) de l'élément de châssis (1).

4. Structure de montage de dispositif de support selon la revendication 1, dans laquelle une paire de plaques de support (31, 32) est formée selon des formes qui sont symétriques entre elles.
